# EUROPEAN PATENT APPLICATION

(11) **EP 4 726 970 A1**
(43) Date of publication of application: **15.04.2026**
(21) Application number: 24209324.3
(22) Date of filing: 29.10.2024
(51) Int. Cl.: H02K 1/14, H02K 1/18, H02K 3/52

(54) **MOTOR STATOR AND FLAT HIGH-POWER MOTOR THEREOF**

(30) Priority: 10.10.2024 CN 202422446785 U
(71) Applicant: Dongguan Power Motor Industrial Co., Ltd., Dongguan City, Guangdong (CN)
(72) Inventor: ZHAO, Ming, Dongguan City (CN); ZHONG, Yuangang, Dongguan City (CN); CHEN, Kungui, Dongguan City (CN); ZHOU, Guorong, Dongguan City (CN)
(74) Representative: Plavsa, Olga

(57) **Abstract**

A motor stator includes a stator core and a stator winding, the stator core including four sidewalls, four transition portions and at least four stator teeth, two adjacent sidewalls perpendicular to each other, each of the four transition portions connected between the two adjacent sidewalls and being arc-shaped, each of the at least four stator teeth extending from the sidewall towards an interior of the stator core, and including a distal end away from the sidewall, and a first receiving room enclosed by four distal ends. The two adjacent stator teeth and the sidewall, or the two adjacent stator teeth and the sidewall and the transition portion are enclosed to form a second receiving room thereamong, the first receiving room connected to the second receiving room, the stator winding wound around each stator tooth and passing through and received between two adjacent second receiving rooms.

## Description

### TECHNICAL FIELD

The present disclosure relates to the field of motors, and especially relates to a motor stator and a flat high-power motor thereof.

### BACKGROUND

An electric motor is a driving device commonly used to convert electric energy into mechanical kinetic energy. The electric motor generally includes a rotor and a stator, where the rotor and stator are not in direct contact. The electric energy is converted into a magnetic field through coils of a stator winding that is arranged on the stator. The magnetic field is applied on a rotor winding that is arranged on the rotor, causing a current to be generated on coils of the rotor winding. The current drives the rotor to rotate under an action of the magnetic field, thereby achieving a conversion from the electrical energy to the mechanical energy.

However, with a continuous development and progress of society and a continuous improvement of life quality, requirements for motors in the home appliance industry are also constantly increasing. The development trend of the motors in the home appliance industry requires the motors with a small size, a high torque and a high speed. When a power of a conventional high-power motor in the home appliance industry reaches over 1000 W, and an input voltage remains constant between 110-220 V, it is required that a total thickness of the motor stator is more than 40 mm. This is to say, only when the total thickness of the motor stator is more than 40 mm, a strength of the magnetic field can meet requirements of the power of the motor. However, a manufacturing process that the motor includes the stator with a total thickness of over 40 mm is difficult, which has a high defect rate and is also not conducive to minimizing the motor.

In addition, when it is necessary to increase the torque of the motor, a quantity and a length of coils of the stator winding need to be increased. When the quantity and the length of the coils of the stator winding increase, one solution is to wind windings horizontally without significantly changing a height of the coils of the stator winding, that is, a thickness of the coils of the stator winding increases significantly. At this time, a distance between distal ends of the coils of the stator winding and a centerline of the rotor increases, and the magnetic field effect will decrease, resulting in a decrease in a conversion rate of the electrical energy. The other solution is that the height of the coils of the stator winding increases with the increase of the number of windings, at this time, the total thickness of the motor stator increases, which will inevitably increase the thickness of the motor without meeting the requirements of miniaturization.

How to provide a technology that can accommodate more coils of the stator winding to increase the power of the motor without increasing the total thickness of the stator is another technical problem that needs to be solved.

Another point is that the motor also includes a plurality of carbon brushes mainly configured to transmit the current between the stator and the rotor of the motor. The plurality of carbon brushes are crucial components of the motor, and usually in contact with a commutator of the rotor. Through these carbon brushes, the current can flow between the rotor and the stator, to allow the motor to operate normally. There is a close relationship between a lifespan of the motor and the carbon brushes. The carbon brush will generate a friction with the commutator during operation of the carbon brush, so that the carbon brush will gradually wear out. The worn carbon brushes may lead to a decrease of performances of the motor and even cause motor malfunctions. Excessive loads of the motor will accelerate to wear of the carbon brushes. Therefore, how to increase a length of the carbon brush and reduce malfunctions of the motor caused by wear of the carbon brush is also a technical problem that needs to be solved.

### SUMMARY

The technical problems to be solved: in view of the shortcomings of the related art, an objective of the present disclosure is to provide a motor stator which can solve technical problems that an insufficient structural space is occurred in the related art, resulting in a small number of winding wires and a short length of a winding coil for difficultly increasing a power of a motor.

A motor stator according to an embodiment of the present disclosure includes a stator core and a stator winding, wherein the stator core is a magnetic conductor containing iron and includes:
four sidewalls arranged on a same plane, one of the four sidewalls perpendicular to the other adjacent sidewall;
four transition portions, each of the four transition portions configured to connect two adjacent sidewalls and being arc-shaped, and centers of the four transition portions overlapped and located inside the stator core;
at least four stator teeth, each of the at least four stator teeth extending from the sidewall towards an interior of the stator core and comprising a distal end away from the sidewall, so that a plurality of distal ends is enclosed to form a first receiving room thereamong; and wherein
a second receiving room is formed among the two adjacent stator teeth and the sidewall, or among the two adjacent stator teeth, the sidewall and the transition portion, a plurality of second receiving rooms formed on the motor stator, and the first receiving room in communication with the second receiving room; and
the stator winding is wound around each stator tooth and passes through and is then received between two adjacent second receiving rooms.

The motor stator of the present disclosure provides the four sidewalls to be taken as four sides of a square-like structure, and the transition portion is arc-shaped, which can maximize a size of the second receiving room within a square or a circular installation space, to increase a quantity and a length of coils of the stator winding that are received in the second receiving room. Furthermore, in such a structure of the stator core, a distance between the distal end of the coils of the stator winding and a centerline of the motor rotor will not be increased due to an increase of the number of coils of the stator winding, so that the technical problem that a magnetic field effect is reduced and lead to a decrease in an conversion rate of electrical energy will not be occurred; furthermore, a thickness of the motor will also not be increased, thereby being easier to be miniaturized.

Another objective of the present disclosure is to provide a flat high-power motor which can solve the technical problem that a size of the conventional motor is caused to be increased in order to increase a power of the conventional motor.

A flat high-power motor according to an embodiment of the present disclosure includes:
the above motor stator;
a front bracket installed on the motor stator;
a rear bracket installed on the motor stator;
a motor rotor passing through and fixed with the motor stator, the motor rotor including a rotation shaft, two ends of the rotation shaft respectively fixed the front bracket and the rear bracket; and wherein
both the front bracket and the rear bracket are cooperatively configured to clamp the motor stator, and the motor rotor rotates around the rotation shaft relative to the motor stator.

In the present disclosure, due to provide the above-mentioned motor stator, it is possible to increase the quality and the length of the stator winding coils in the motor core as much as possible, while changing the thickness of the motor; while increasing the power of the motor, maintaining the size of the motor without being increased, so as to be easier to miniaturize the motor. In addition, since the two ends of the rotation shaft of the motor rotor are respectively installed on the front bracket and the rear bracket, that is to say, the motor rotor is arranged among the front bracket, the stator core and the rear bracket, and the rotation shaft is fixed on the front and rear brackets, on the one hand, it can ensure a compactness of the motor and maximize an utilization efficiency of a space thereof, and on the other hand, a distance between the front bracket and the rear bracket can be designed and adjusted according to the length of the rotation shaft, so that the distance is designed and adjusted to exactly fix the two ends of the rotation shaft, which can minimize the thickness of the motor as much as possible.

Another objective of the present disclosure is to provide another flat high-power motor which can solve the technical problem of a short carbon brush, and a long-term wear and tear that easily leads to a failure in the conventional motor.

A flat high-power motor according to another embodiment of the present disclosure includes:
the above motor stator;
a front bracket installed on a top surface of the motor stator;
a rear bracket installed on a bottom surface of the motor stator;
a motor rotor passing through and fixed with the motor stator, the motor rotor comprising a rotation shaft and a commutator, the commutator positioned on the rotation shaft and rotating with the rotation shaft, and two ends of the rotation shaft respectively fixed the front bracket and the rear bracket;
a plurality of carbon brushes respectively fixed to the rear bracket and facing the motor stator;
wherein the motor rotor rotates around the rotation shaft relative to the motor stator; and wherein
the rear bracket includes:
   a second tabletop arranged below the motor rotor and comprising a second positioning hole formed at a center thereof;
   four second arms respectively extending outward from the second tabletop, and any two adjacent second arms perpendicular to each other;
   a second incline portion extending outward from the second arm and inclined towards the motor stator;
   a second fixing portion extending outward from the second incline portion and fixed to the transition portion;
   each stator winding arranged between two adjacent second arms; and wherein
   the plurality of carbon brushes includes four carbon brushes, any two adjacent carbon brushes perpendicular to each other, one end of each of the four carbon brushes electrically connected to the commutator, and the other end of each of the four carbon brushes extending out of the rear bracket; each of the four carbon brushes arranged relative to the second arm for increasing a length of each of the four carbon brushes.

In the present disclosure, the stator winding is arranged between two adjacent second arms, that is, the stator winding is arranged within the gap of the rear bracket, which can maximize the number of coils in the stator winding. In addition, it is viewed from an external structure of the entire motor, the motor is similar to a square structure. The sidewalls of the stator core are as four sides of the square, and the four transition portions of the stator core are as four vertices of the square. The four second arms are equivalent to positions of diagonal lines of the square, the carbon brush is arranged relative to the second arm, which can make the length of the carbon brush the longest in the square and reduce the problem of motor failure caused by wear and tear of the carbon brush.

### BRIEF DESCRIPTION OF THE DRAWINGS

FIG. 1 is a schematic view of a motor stator in accordance with an embodiment of the present disclosure.
FIG. 2 is a schematic view of a stator core of the motor stator of FIG. 1.
FIG. 3 is a schematic view of the motor stator without a stator winding thereof of FIG. 1.
FIG. 4 is a top view of FIG. 3.
FIG. 5 is a side sectional axial view of FIG. 3.
FIG. 6A is a schematic view of a motor in accordance with an embodiment of the present disclosure.
FIG. 6B an installation schematic view of a front bracket of the motor of the present disclosure.
FIG. 7 is similar to FIG. 6A, but shown from another view.
FIG. 8 is a side sectional axial view of the motor of FIG. 6A.
FIG. 9 is a schematic view of a motor rotor of the motor of the present disclosure.
FIG. 10 is a side sectional axial view of the motor without the motor rotor of the present disclosure.
FIG. 11 is a top sectional axial view of the motor without the motor rotor of the present disclosure.
FIG. 12 is a side sectional axial view of the motor assembled with the motor rotor of the present disclosure.

### DETAILED DESCRIPTION

Reference will now be made in detail to embodiments, examples of which are illustrated in the accompanying drawings.

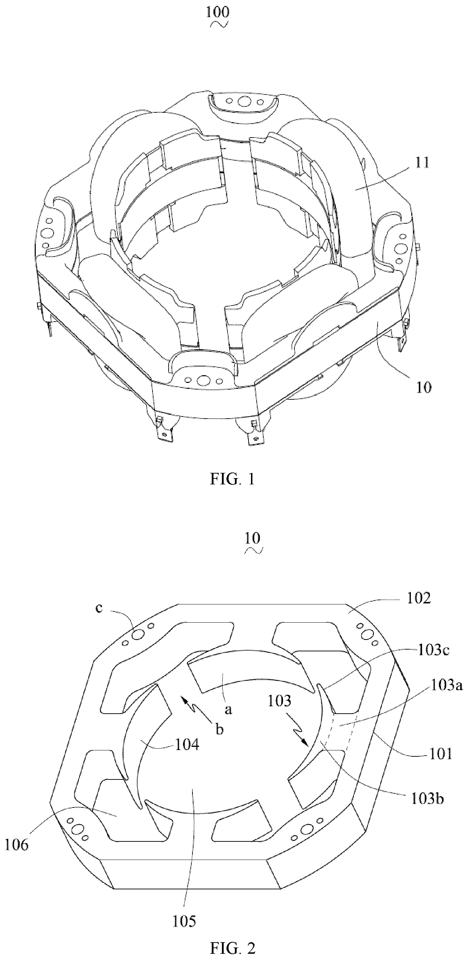

Referring to FIG. 1, a motor stator 100 in accordance with an embodiment of the present disclosure includes a stator core 10 and a stator winding 11, wherein the stator core 10 is a magnetic conductor containing iron and the stator winding 11 is wound around the motor stator 10.

Specifically, the motor stator 10 includes four sidewalls 101, four transition portions 102 and at least four stator teeth 103.

The entire stator core 10 is a platform structure, the four sidewalls 101 arranged in the same plane. One sidewall 101 is perpendicular to an adjacent sidewall 101, to be similar to form four sides of a square. Each of the four transition portions 102 is configured to connect two adjacent sidewalls 101 and being arc-shaped, and centers of the four transition portions 102 are overlapped and located inside the stator core 10. That is to say, the transition portion 102 can be similar to take as four vertices of the square, the arc-shaped transition portion 102 can be adapted to installation positions to be installed as circular holes, and the four sidewalls 101 that are taken as four sides of the square can be installed in the installation positions of the square. Such structure can be adapted to more installation ways.

The at least four stator teeth 103 are at least four, each of the at least four stator teeth 103 extending from the sidewall 101 towards an interior of the stator core 10 and including a distal end 104 away from the sidewall 101. When there are four stator teeth 103, four distal ends 104 are enclosed to form a first receiving room 105. When there are more than four stator teeth 103, such as eight stator teeth 103, there are also eight distal ends 104, and the eight distal ends 104 are enclosed to form the first receiving room 105. The term "enclose" described in the present disclosure is referred that an area that is an enclosed area of an interior by connecting a line along extension trajectories of the four distal ends 104. The stator teeth 103 serve as a support structure for winding the stator winding 11, to play a role for fixing the stator winding 11. When there are four stator teeth 103, a second receiving room 106 is formed by enclosing two adjacent stator teeth 103, two adjacent sidewalls 101, and the transition portion 102 that connects the two adjacent sidewalls 101. There are four second receiving rooms 106 in the present disclosure, and the second receiving room 106 is in communication with the first receiving room 105. The stator winding 11 is wound around each stator tooth 103 and passes through and is then received between two adjacent second receiving rooms 106.

In the present disclosure, the area that is enclosed by the two adjacent stator teeth 103, the two adjacent sidewalls 101 and the transition portion 102 that connects the two adjacent sidewalls 101 is an irregular area. As for the stator core 10, in addition to receiving a motor rotor 400 therein, the stator core 10 is also necessary to receive the stator winding 11 and easily fix the stator winding 11. In this way, the second receiving room 106 formed by the irregular area can obtain a maximum accommodating space in the square-like stator core 10 as much as possible, thereby increasing the number and a length of coils of the stator winding 11, so that the motor can obtain a greater torque without increasing its own size.

In the present disclosure, when there are a plurality of stator teeth 103, for example, there are eight stator teeth 103, each of the eight stator teeth 103 also extends from the sidewall 101. Two stator teeth 103 extend from the same sidewall 101, Two adjacent stator teeth 103 that are arranged on the same sidewall 101 and the sidewall 101 are cooperatively enclosed to form the second receiving room 106. Among them, two stator teeth 103 extend from the same side 101, and two adjacent stator teeth 103 that are arranged on different sidewalls 101, the two adjacent sidewalls 101, and the transition portion 102 that connects the two adjacent sidewalls 101 are cooperatively enclosed to form the second receiving room 106. As the number of stator teeth 103 that are selected increases, the number of second receiving rooms 106 also increases. At the same time, the number of stator windings 11 that are wound around the stator teeth 103 also increases, so that a space between adjacent stator windings 11 decreases, equivalently, the number of coils of the stator winding 11 of the entire motor 100 increases, and a coil length also increases, which can obtain a greater torque thereof, without increasing a size of the motor.

On the other hand, in such a structure of the stator core 10, a distance between the distal end 104 of the stator winding coil and a centerline of the motor rotor will not be increased due to an increase of the number of stator winding coils, so that the technical problem that a magnetic field effect is reduced and lead to a decrease in an electrical energy conversion rate will not be occurred; furthermore, a thickness of the motor also will not be increased, thereby being easier to be miniaturized. Such a structure refers that four sides of the square are formed by the sidewalls 101, and the curved transition section 102 serves as a vertex structure of the square.

In the present disclosure, the first receiving room 105 and the second receiving room 106 are conductive to each other. When the stator winding 11 in the second receiving room 106 and the motor rotor 400 in the first receiving room 105 are spatially conductive to each other, which can not only improve an electromagnetic force, but also facilitate air flow and heat dissipation.

The motor stator 100 of the present disclosure, the stator tooth 103 includes an extending portion 103a and a tooth end 103b.

The extension portion 103a extends from a middle of the sidewall 101.

That is to say, the stator tooth 103 is arranged in the middle of the sidewall 101. When the stator winding 11 is wound around the stator tooth 103, it can ensure that the stator winding 11 is located near each sidewall 101 and arranged in the middle of each sidewall 101. Overall, the four stator windings 11 are arranged on the four sides of the square, with a regular distribution pattern. The magnetic field is stable during operation of the motor stator 100, and it can reduce magnetic leakage and improve an efficiency of electrical energy conversion.

The tooth end 103b extends from the extending portion 103a towards the center of the stator core 10, and a first stop 103c is formed on both sides of the extending portion 103a. A gap b is formed between the first stop 103c of one tooth end 103b and the first stop 103c of the other adjacent tooth end 103b, wherein the first receiving room 105 and the second receiving room 106 is conductive with each other by the gap b.

In the present disclosure, On the one hand, the first stop 103c serves to stop and fix the stator winding 11, and on the other hand, the first stop 103c can divide the stator core 10 into the second receiving rooms 106 arranged near the four vertices of the square. In this way, a space near the vertices of the square can be utilized to obtain a relatively compact structure thereof, which is conducive to a miniaturization of the motor. In addition, it is conducive to forming a larger space near the vertices of the square to receive more stator windings 11 therein.

Furthermore, a surface of the tooth end 103b facing away from the extending end 103a is a first curved surface a. The first curved surfaces a of the four tooth ends 103b are formed a circumference of the same circle, and connection lines of the four first curved surfaces a are to form the first receiving room 105.

In the present disclosure, the tooth end 103b that is configured to fix the stator winding 11 is set as a structure with the first curved surface a, on the one hand, the first curved surface a can be used to stop the stator winding 11, and on the other hand, an area enclosed by the four first curved surfaces a can be naturally to form the first receiving room 105, to receive the motor rotor 400 therein, which can obtain a clever design and improve utilization of internal spaces, rather than designing other structures to be specifically taken as the first receiving room 105 to receive the motor rotor 400 therein.

In the present disclosure, the stator core 10 is integrally made by moldings, on the one hand, which can meet manufacturing needs of the irregular structure of the stator core 10, and on the other hand, which can improve a structural strength of the stator core 10 itself, enhance a magnetic permeability and prevent magnetic leakage.

In the present disclosure, a ratio between an outer diameter of the stator core 10 and a thickness of the stator core 10 is called as a length-to-height ratio, wherein a range of the length-to-height ratio is from 4:1 to 18:1, which is preferred to be 8:1. Specifically, when the length-to-height ratio of the stator core 10 is selected between 4:1 and 18:1, on the one hand, it can minimize the thickness of the motor stator 100 as much as possible, result in ensuring a flatness of the entire motor. On the other hand, as the length-to-height ratio increases, the number of the stator teeth 103 can also be increased, thereby reducing the thickness of the motor without reducing the number and the length of the coils of stator winding 11. For example, when there are eight stator teeth 103, the length-to-height ratio of the stator core 10 can be selected as 16:1 or 18:1.

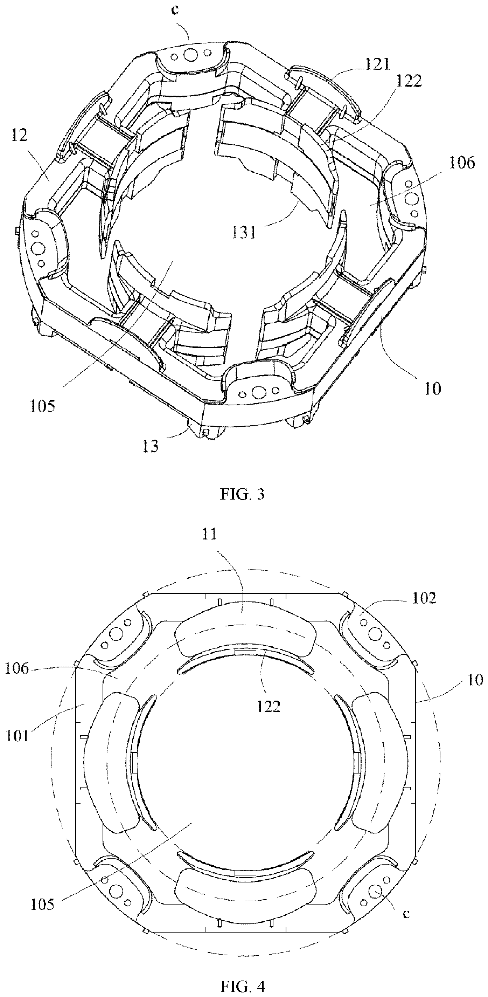

Referring to FIG. 3, in the present disclosure, the motor stator 100 further includes an upper plate 12 and a lower plate 13.

The upper plate 12 is fixed to the stator core 10, a position of the upper plate 12 relative to the stator winding 11 provided with a second stop 121 and a third stop 122, both the second stop 121 and the third stop 122 configured to clamp the stator winding 11.

The lower plate 13 is fixed to the stator core 10, a fourth stop 131 provided at a position of the lower plate 13 relative to the stator winding 11, the fourth stop 131 configured to position the stator winding 11. Both the upper plate 12 and the lower plate 13 are cooperatively configured to clamp the stator core 10.

In the present disclosure, the second stop 121 and the third stop 122 provided on the upper plate 12 and the fourth stop portion 131 provided on the lower plate 13 can more effectively fix the stator winding 11 and prevent the stator winding 11 from being displacement.

In addition, windings of two ends of the stator winding 11 can extend outwardly through the upper plate 12 or the lower plate 13 for connecting to an external power source. Such structure ensures that connecting wires are neat, compact and not messy, which is beneficial for reducing the size of the motor.

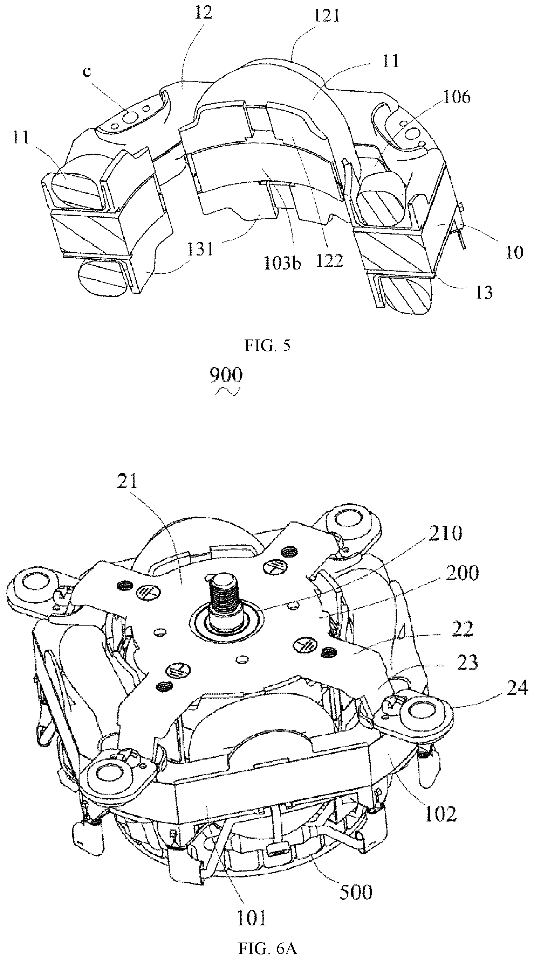

Referring to FIG. 6A to FIG. 8, another objective of the present disclosure is to provide a flat high-power motor 900 first including the motor stator 100 as described above. The motor 900 further includes a front bracket 200, a rear bracket 300, a motor rotor 400 with a rotation shaft 41.

The front bracket 200 is installed on the motor stator 100, the rear bracket 300 installed on the motor stator 100, both the front bracket 200 and the rear bracket 300 cooperatively configured to clamp the motor stator 100, the motor rotor 40 passing through and fixed with the motor stator 100, two ends of the rotation shaft 41 respectively fixed the front bracket 200 and the rear bracket 300, and the motor rotor 400 rotating around the rotation shaft 41 relative to the motor stator 100.

In the present disclosure, the motor 900 as a whole includes the motor stator 100, and both the front bracket 200 and the rear bracket 300 clamped with the motor stator 100 and fixed to the motor stator 100. The motor rotor 400 is fixed to the front bracket 200 and the rear bracket 300 through the two ends of the rotation shaft 41, so that the entire structure is compact and neat.

The motor 900 of the present disclosure provides the aforementioned motor stator 100, so that more stator windings 11 are received in the second receiving room 106, thereby increasing the power of the motor 900. At the same time, both a height of the front bracket 200 and a height of the rear bracket 300 are basically the same or similar to that of the stator winding 11. Therefore, even if the front bracket 200 and the rear bracket 300 for fixing the motor rotor 400 are set, the thickness of the motor 900 itself is not changed. Therefore, the motor 900 of the present disclosure can be flatness and miniaturization while improving the power of the motor 900. When the length-to-height ratio of the stator core 10 is 4:1, according to a power requirement of the motor 900, after all the front bracket 200, the rear bracket 300 and the stator winding 11 are installed, the distance between an outer surface of the front bracket 200 and the rear bracket 300 of the motor 900 is less than 75 mm. When using the stator core 10 with a larger length-to-height ratio, the distance between the outer surface of the front bracket 200 and the rear bracket 300 of the motor 900 will be further reduced. When the length-to-height ratio of the stator core 10 is 18:1, the distance between the outer surface of the front bracket 200 and the rear bracket 300 of the motor 900 is 35 mm, thereby a flatten structure of the present disclosure is obtained. Compared to the conventional motor with the same power, the thickness of the present disclosure is sharply reduced.

In addition, since the two ends of the rotation shaft 41 of the motor rotor 400 are installed on the front bracket 200 and the rear bracket 300 respectively, that is to say, the motor rotor 400 is located among the front bracket 200, the motor stator 100 and the rear bracket 300, and the rotation shaft 41 is fixed on the front bracket 200 and the rear bracket 300, on the one hand, it can ensure the compactness of the motor structure and maximize the utilization efficiency of spaces, and on the other hand, the distance between the front bracket 200 and the rear bracket 300 can be designed and adjusted according to a length of the rotation shaft 41, so that the distance is designed and adjusted to exactly fix the two ends of the rotation shaft 41, which can minimize the thickness of the motor 900 as much as possible.

In the present disclosure, the front bracket 200 includes: a first tabletop 21, four first arms 22, a first incline portion 23, and a first fixing portion 24.

The first tabletop 21 is arranged above the motor rotor 100 and includes a first positioning hole 210 formed at a center thereof. In the present disclosure, the first tabletop 21 is a flat surface, which can cover ends of the motor rotor 400 and provide mounting structures such as fixing holes on the flat first tabletop 21 to save a space thereof. Compared to structures such as protruding irregular planes, the present disclosure is beneficial to reduce the overall thickness of the motor 900.

The four first arms 22 are respectively extending outward from the first tabletop 21, any two adjacent first arms 21 perpendicular to each other; the first incline portion 23 extending outward from the first arm 22 and inclined towards the motor stator 100, and the first fixing portion 24 extending outward from the first incline portion 23 and fixed to the transition portion 102.

In the present disclosure, the front bracket 200 is fixed to the motor stator 100 by extending the four first arms 22 that are perpendicular to each other, and fixed positions are precisely located at the transition portions 102 that resemble the four vertices of the square. Such structure can improve a fixing strength between the front bracket 200 and the motor stator 100, while ensuring that a support force of the front bracket 200 is more uniform, and preventing the front bracket 200 from being displaced.

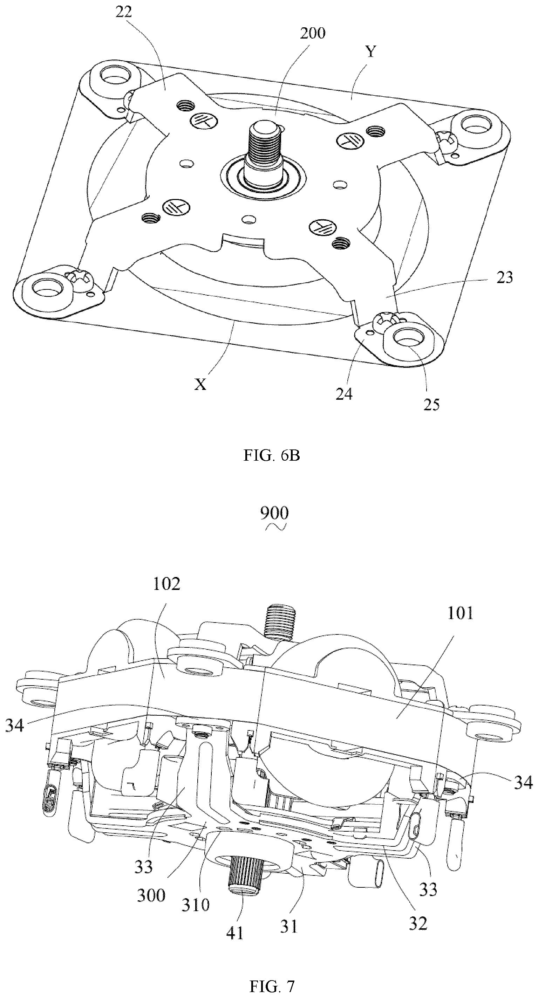

Referring to FIG. 6B, in the present disclosure, the front bracket 200 further includes a plurality of installation ears 25 for installing and fixing the motor 900; each of the plurality of installation ears 25 extending from the first fixing portion 24 towards the outside of the motor 900, and protruding outwardly from the motor stator 100.

During installing the motor 900, after the motor 900 is placed into a square or a circular installation hole X to be installed, the front bracket 200 protrudes from the installation hole X, and the installation ear 25 is located above a wall or a surface of a structural component Y where the installation hole X is located. The motor 900 can be conveniently fixed in the installation hole X by passing through a screw rod or a fixing rod of the installation ear 25.

Similarly, the rear bracket 300 includes: a second tabletop 31, four second arms 32, a second incline portion 33 and a second fixing portion 34.

The second tabletop 31 is arranged below the motor rotor 100 and includes a second positioning hole 310 formed at a center thereof. A function of the second tabletop 31 is the same as that of the first tabletop 21. Both the first tabletop 21 and the second tabletop 31 are flat surfaces, which can facilitate a flattening of the motor 900. A distance between the first tabletop 21 and the second tabletop 31 is adapted to the length of the rotation shaft 41 to reduce the thickness of the motor 900.

The four second arms 32 respectively extend outward from the second tabletop 31, any two adjacent second arms 32 perpendicular to each other, the second incline portion 33 extending outward from the second arm 32 and inclined towards the motor stator 100, and the second fixing portion 34 extending outward from the second incline portion 33 and fixed to the transition portion 102.

In the present disclosure, a structure of the rear bracket 300 is similar to that of the front bracket 200. Such structure can improve a fixing strength between the rear bracket 300 and the motor stator 100, while ensuring that the support force of the rear bracket 300 is more uniform, and preventing the rear bracket 300 from being displaced.

In the present disclosure, the two ends of the rotation shaft 41 are respectively positioned at the first positioning hole 210 and the second positioning hole 310, and the first positioning hole 210 and the second positioning hole 310 are opposite to each other. The rotation shaft 41 is perpendicular to a plane where the motor stator 100 is located.

The motor rotor 400 is vertically fixed on the front bracket 200 and the rear bracket 300, and the fixing strength between the front bracket 200 and the rear bracket 300 ensures stability and consistency of the motor rotor 400 during rotation of the motor rotor 400, to ensure uniform distribution of the magnetic field thereof.

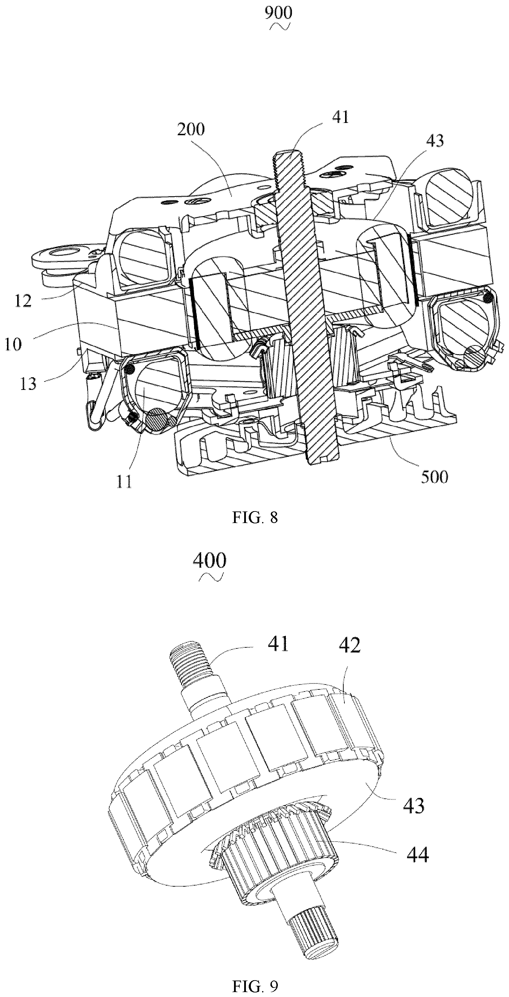

Referring to FIG. 9, more specifically in the present disclosure, the motor rotor 400 further includes: a plurality of rotor teeth 42 and a rotor winding 43.

The plurality of rotor teeth 42 is distributed along a circumference of the rotation shaft 41 at intervals, the rotor winding 43 is wound around each of the plurality of rotor teeth 42, and the plurality of rotor teeth 42 are arranged within the first receiving room 105.

The plurality of rotor teeth 42 distributed on the circumference is provided that the rotor winding 43 wounds on the plurality of rotor teeth 42 can be evenly distributed on the circumference within a 360 degree range, thereby ensuring the stability of the motor rotor 400 during rotation.

The transition portion 102 is provided with a mounting hole c, and a connecting line between the mounting holes c of two opposite transition portions 102 passes through the gap b. The front bracket 200 and the rear bracket 300 are fixed to each other through the mounting hole c.

That is to say, the first arm 22 extending from the front bracket 200 and the second arm 32 extending from the rear bracket 300 correspond to the gap b in a vertical direction, and the gap b is configured to pass through the first receiving room 105 and the second receiving room 106. This structure provides a larger space between the first arm 22 and the second arm 32 for air flow and heat dissipation. On the other hand, the gap b is located between two adjacent stator windings 11, which can ensure the uniformity of the magnetic field.

The front bracket 200 and the rear bracket 300 are at the same position, that is, the position of the mounting hole c, to be fixed to the motor stator 100, which can be fixed by using common bolts, so that the fixing way is relatively simple and the disassembly is also simple. In addition, all the front bracket 200, the rear bracket 300 and the motor stator 100 are fixed at the same position, which can ensure absolute stability of all the front bracket 200, the rear bracket 300 and the motor stator 100, so as to fix all the front bracket 200, the rear bracket 300 and the motor stator 100 more firmly.

In the present disclosure, the motor 900 further includes a cooling fan 500 arranged on the outside of the rear bracket 300, connected to the rotation shaft 41, and rotating with the rotation shaft 41 to cool the motor 900.

When the cooling fan 500 rotates, air in a space between the front bracket 200 and the rear bracket 300 is conducted to flow, and the gap b in the second receiving room 106 conducts the air flow between the front bracket 200 and the rear bracket 300 in the vertical direction, which has a good heat dissipation effect and is conducive to heat dissipation of the motor rotor 400.

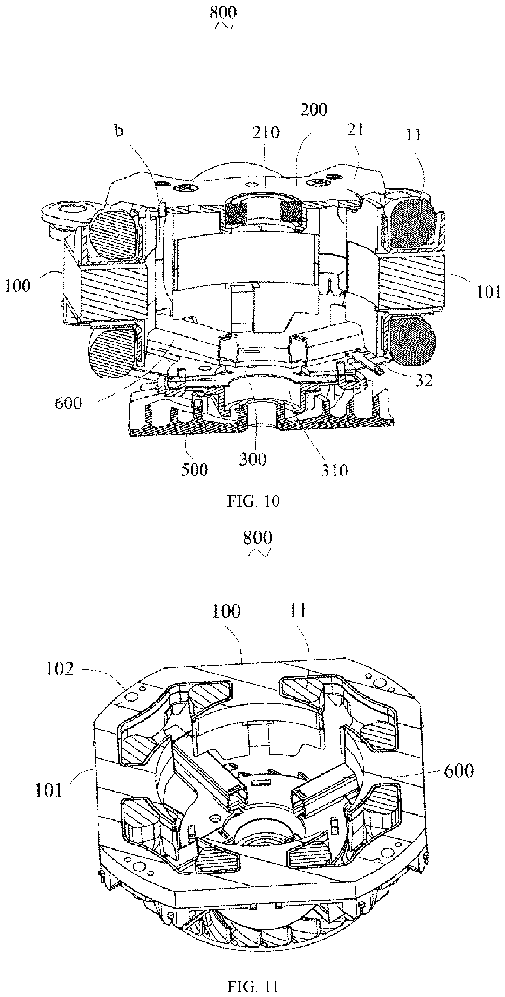

Referring to FIG. 9, FIG. 10 to FIG. 12, the present disclosure also provides another flat high-power motor 800 including the above-mentioned motor stator 100, the front bracket 200, the rear bracket 300, the motor rotor 400, and further including a carbon brush 600.

The motor rotor 400 also includes a commutator 44 positioned on the rotation shaft 41 and rotating with the rotation shaft 41.

The carbon brush 60 is fixed on a surface of the rear bracket 300 facing the motor stator 100, the motor 800 of the present disclosure includes a plurality of carbon brushes 600.

In an embodiment of the present disclosure, the plurality of carbon brushes 600 includes four carbon brushes, any two adjacent carbon brushes 600 perpendicular to each other, one end of each of the four carbon brushes 600 electrically connected to the commutator 44, and the other end of each of the four carbon brushes 600 extending out of the rear bracket 300; each of the four carbon brushes 600 arranged relative to the second arm 32 for increasing a length of each of the four carbon brushes 600.

In the present disclosure, the stator winding 11 is arranged between two adjacent second arms 32, that is, the stator winding 11 is arranged within the gap b of the rear bracket 300, which can maximize the number of coils in the stator winding 11. In addition, it is viewed from an external structure of the entire motor, the motor 800 is similar to a square structure. The sidewalls 101 of the stator core 10 are as four sides of the square, and the four transition portions 102 of the stator core 10 are as four vertices of the square. The four second arms 32 are equivalent to positions of diagonal lines of the square, the carbon brush 600 is arranged relative to the second arm 32, which can make the length of the carbon brush 600 the longest in the square and reduce the problem of motor failure caused by wear and tear of the carbon brush 600.

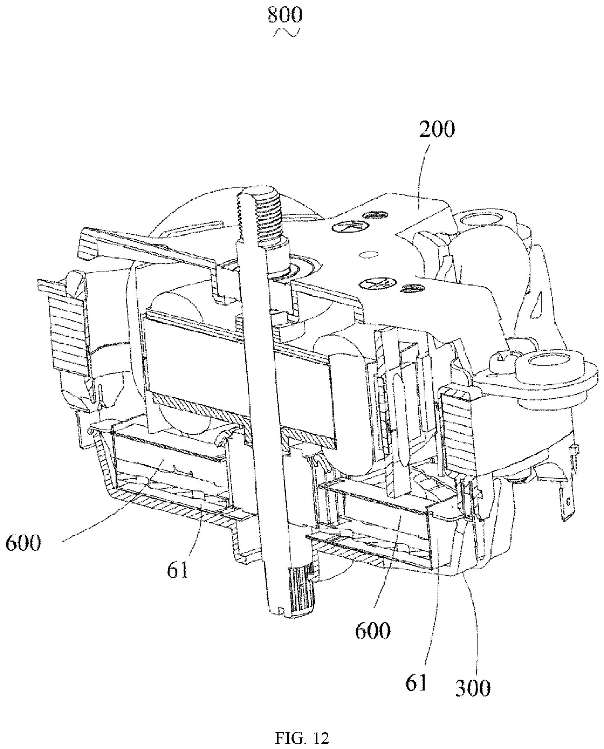

Referring to FIG. 7 and FIG. 12, in the present disclosure, a sheet-like gasket 61 is arranged between each of the four carbon brushes 600 and the rear bracket 300, and covers an area between the four carbon brushes 600 and the four second arms 32, and an area between the four carbon brushes 600 and the second incline portion 33, to insulate the four carbon brushes 600 from the rear bracket 300.

The sheet-like gasket 61 is preferred to be an L-shaped structure, one end of the sheet-like gasket 61 abutting against the second inclined portion 33, and the other end of the sheet-like gasket 61 opposite to the second arm 32, thereby ensuring all positions of the sheet-like gasket 61 that may come into contact with the rear bracket 300 to be insulated.

Although the features and elements of the present disclosure are described as embodiments in particular combinations, each feature or element can be used alone or in other various combinations within the principles of the present disclosure to the full extent indicated by the broad general meaning of the terms in which the appended claims are expressed. Any variation or replacement made by one of ordinary skill in the related art without departing from the spirit of the present disclosure shall fall within the protection scope of the present disclosure.

## Claims

1. A motor stator (100) comprising a stator core (10) and a stator winding (11), wherein the stator core (10) is a magnetic conductor containing iron, which is **characterized in that**, the motor stator (100) comprises:
four sidewalls (101) arranged on a same plane, one of the four sidewalls (101) perpendicular to the other adjacent sidewall (101);
four transition portions (102), each of the four transition portions (102) configured to connect two adjacent sidewalls (101) and being arc-shaped, and centers of the four transition portions (102) overlapped and located inside the stator core (100);
at least four stator teeth (103), each of the at least four stator teeth (103) extending from the sidewall (101) towards an interior of the stator core (10) and comprising a distal end (104) away from the sidewall (101), so that a plurality of distal ends (104) is enclosed to form a first receiving room (105) thereamong; and wherein
a second receiving room (106) is formed among the two adjacent stator teeth (103) and the sidewall (101), or among the two adjacent stator teeth (103), the sidewall (101) and the transition portion (102), a plurality of second receiving rooms (106) formed on the motor stator (100), and the first receiving room (105) in communication with the second receiving room (106); and
the stator winding (11) is wound around each stator tooth (103) and passes through and is then received between two adjacent second receiving rooms (106).

2. The motor stator (100) as claimed in claim 1, which is **characterized in that**, the at least four stator teeth (103) comprise four stator teeth, and the second receiving room (106) is formed by enclosing the two adjacent stator teeth (103), the two adjacent sidewalls (101), and the transition portion (102) connected between the two adjacent sidewalls (101), the plurality of second receiving rooms (106) comprises four second receiving rooms (106).

3. The motor stator (100) as claimed in claim 2, which is **characterized in that**, the stator tooth (103) comprises:
an extending portion (103a) extending from a middle of the sidewall (101);
a tooth end (103b) extending from the extending portion (103a) towards a center of the stator core (10), and a first stop (103c) formed on both sides of the extending portion (103a); and
a gap (b) formed between the first stop (103c) of one tooth end (103b) and the first stop (103c) of the other adjacent tooth end (103b), wherein the first receiving room (105) and the second receiving room (106) is conductive with each other by the gap (b).

4. The motor stator (100) as claimed in claim 1, which is **characterized in that**, the motor stator (100) further comprises:
an upper plate (12) fixed to the stator core (10), and a position of the upper plate (12) relative to the stator winding (11) provided with a second stop (121) and a third stop (122), both the second stop (121) and the third stop (122) configured to clamp the stator winding (11); and
a lower plate (13) fixed to the stator core (10), and a fourth stop (131) provided at a position of the lower plate (13) relative to the stator winding (11), the fourth stop (131) configured to position the stator winding (11); and
both the upper plate (12) and the lower plate (13) cooperatively configured to clamp the stator core (10).

5. A flat high-power motor (900) comprising a motor stator (100) and a motor rotor (400), which is **characterized in that**, the motor (900) further comprising:
a front bracket (200) installed on the motor stator (100);
a rear bracket (300) installed on the motor stator (100);
the motor rotor (400) passing through and fixed with the motor stator (100), the motor rotor (400) comprising a rotation shaft (41), two ends of the rotation shaft (41) respectively fixed the front bracket (200) and the rear bracket (300); and wherein
both the front bracket (200) and the rear bracket (300) are cooperatively configured to clamp the motor stator (100), and the motor rotor (400) rotates around the rotation shaft (41) relative to the motor stator (100); the motor stator (100) comprising a stator core (10) and a stator winding (11), wherein the stator core (10) is a magnetic conductor containing iron and comprises:
four sidewalls (101) located in a same plane, one of the four sidewalls (101) perpendicular to the other adjacent sidewall (101);
four transition portions (102), each of the four transition portions (102) configured to connect two adjacent sidewalls (101) and being arc-shaped, and centers of the four transition portions (102) overlapped and located inside the stator core (10);
at least four stator teeth (103), each of the at least four stator teeth (103) extending from the sidewall (101) towards an interior of the stator core (10) and comprising a distal end (104) away from the sidewall (101), so that a plurality of distal ends (104) is enclosed to form a first receiving room (105) thereamong; and wherein
a second receiving room (106) is formed among the two adjacent stator teeth (103) and the sidewall (101), or among the two adjacent stator teeth (103), the sidewall (101) and the transition portion (102), a plurality of second receiving rooms (106) formed on the motor stator (100), and the first receiving room (105) in communication with the second receiving room (106); and
the stator winding (11) is wound around each stator tooth (103) and passes through and is then received between two adjacent second receiving rooms (106).

6. The motor (900) as claimed in claim 5, wherein the at least four stator teeth (103) comprise four stator teeth (103), and the second receiving room (106) is formed by enclosing the two adjacent stator teeth (103), the two adjacent sidewalls (101), and the transition portion (102) connected between the two adjacent sidewalls (101), the plurality of second receiving rooms (106) comprises four second receiving rooms (106).

7. The motor (900) as claimed in claim 6, wherein the front bracket (200) comprises:
a first tabletop (21) arranged above the motor rotor (100) and comprising a first positioning hole (210) formed at a center thereof;
four first arms (22) respectively extending outward from the first tabletop (21), and any two adjacent first arms (22) perpendicular to each other;
a first incline portion (23) extending outward from the first arm (22) and inclined towards the motor stator (100); and
a first fixing portion (24) extending outward from the first incline portion (23) and fixed to the transition portion (102).

8. The motor (900) as claimed in claim 7, wherein the rear bracket (300) comprises:
a second tabletop (31) arranged below the motor rotor (100) and comprising a second positioning hole (310) formed at a center thereof;
four second arms (32) respectively extending outward from the second tabletop (31), and any two adjacent second arms (32) perpendicular to each other;
a second incline portion (33) extending outward from the second arm (32) and inclined towards the motor stator (100); and
a second fixing portion (34) extending outward from the second incline portion (33) and fixed to the transition portion (102).

9. The motor (900) as claimed in claim 8, wherein the front bracket (200) further comprises a plurality of installation ears (25) for installing and fixing the motor (900); each of the plurality of installation ears (25) extending from the first fixing portion (24) towards the outside of the motor (900), and protruding outwardly from the motor stator (100).

10. The motor (900) as claimed in claim 9, wherein two ends of the rotation shaft (41) are respectively positioned in the first positioning hole (210) and the second positioning hole (310), the first positioning hole (210) and the second positioning hole (310) opposite to each other, and the rotation shaft (41) perpendicular to a plane where the motor stator (100) is located.

11. The motor (900) as claimed in claim 5, wherein a ratio range between an outer diameter of the stator core (10) and a thickness of the stator core (10) is from 4:1 to 18:1, so that a distance between an outer surface of the front bracket (200) and an outer surface of the rear bracket (300) is less than 75mm.

12. The motor (900) as claimed in claim 5, wherein each of the four transition portions (102) comprises a mounting hole (c), and a connecting line between the mounting holes (c) of two opposite transition portions passes through the gap (b); the front bracket (200) and the rear bracket (300) fixed to each other through the mounting holes (c).

13. A flat high-power motor (900) comprising a motor stator (100) and a motor rotor (400), which is **characterized in that**, the motor (900) further comprising:
a front bracket (200) installed on a top surface of the motor stator (100);
a rear bracket (300) installed on a bottom surface of the motor stator (100);
the motor rotor (400) passing through and fixed with the motor stator (100), the motor rotor (400) comprising a rotation shaft (41) and a commutator (44), the commutator (44) positioned on the rotation shaft (41) and rotating with the rotation shaft (41), and two ends of the rotation shaft (41) respectively fixed the front bracket (200) and the rear bracket (300);
a plurality of carbon (600) brushes respectively fixed to the rear bracket (300) and facing the motor stator (100); and wherein
the motor rotor (400) rotates around the rotation shaft (41) relative to the motor stator (100); and wherein
the rear bracket (300) comprises:
a second tabletop (31) arranged below the motor rotor (100) and comprising a second positioning hole (310) formed at a center thereof;
four second arms (32) respectively extending outward from the second tabletop (31), and any two adjacent second arms (32) perpendicular to each other;
a second incline portion (33) extending outward from the second arm (32) and inclined towards the motor stator (100);
a second fixing portion (34) extending outward from the second incline portion (33) and fixed to the transition portion (102);
each stator winding (11) arranged between two adjacent second arms (32); and wherein
the plurality of carbon brushes (600) comprises four carbon brushes (600), any two adjacent carbon brushes (600) perpendicular to each other, one end of each of the four carbon brushes (600) electrically connected to the commutator (44), and the other end of each of the four carbon brushes (600) extending out of the rear bracket (300); each of the four carbon brushes (600) arranged relative to the second arm (32) for increasing a length of each of the four carbon brushes (600).

14. The motor (900) as claimed in claim 13, wherein the motor (900) further comprises a cooling fan (500) arranged on the outside of the rear bracket (300), connected to the rotation shaft (51), and rotating with the rotation shaft (41) to cool the motor (900).

15. The motor (900) as claimed in claim 13, wherein a sheet-like gasket (61) is arranged between each of the four carbon brushes (600) and the rear bracket (300), and covers an area between the four carbon brushes (600) and the four second arms (32) and an area between the four carbon brushes (600) and the second incline portion (33), to insulate the four carbon brushes (600) from the rear bracket (300).
